# EUROPEAN PATENT APPLICATION

(11) **EP 1 777 621 A2**
(43) Date of publication of application: **25.04.2007**
(21) Application number: 06021428.5
(22) Date of filing: 12.10.2006
(51) Int. Cl.: G06F 9/46

(54) **Apparatus and method for managing resources of mobile communication terminal**

(30) Priority: 19.10.2005 KR 20050098844
(71) Applicant: LG Electronics Inc., Yongdungpo-Gu Seoul 150-010 (KR)
(72) Inventor: Yoo, Jun-Hyun, Anyang Gyeonggi-Do (KP); Joeng, Hoe-Kyung, Gunpo Gyeonggi-Di (KP)
(74) Representative: Katérle, Axel

(57) **Abstract**

A mobile communication terminal including a resource unit (70) configured to allocate resources so as to execute a first module (42)..(48), and a resource management unit (60) configured to compare a ranking of a second module (42)..(48) selected to be executed with respect to a ranking of the first module so as to determine if the second module is allocated the resources used by the first module.

## Description

### BACKGROUND OF THE INVENTION

### 1. Field of the Invention

The present invention relates to a mobile communication terminal and corresponding method that efficiently manages multiple resources on the mobile terminal.

### 2. Description of the Related Art

A mobile communication service provider provides a user with communication functions such as wireless Internet connections, VoD (Video on Demand), text and multimedia messaging. The terminal manufacturer also provides the user with functions that are performed by the terminal itself without being related to the communication functions such as a camera, a memo, a schedule organizer, a wakeup call, etc.

Further, each function (or module) is processed by occupying resources (e.g., a PS (Packets Switching) resource, buffer resources, a DSP (Digital Signal Processor), etc.) of the mobile terminal. However, when simultaneously resources are used in a multitasking environment, a resource collision occurs. When a resource collision occurs, each individual function determines whether or not to use the resources.

For instance, when a phone call is received while the user is watching a video on a display of the terminal, a phone module requests a video module to release the resources. When the video module releases the resources, the phone module occupies the resources to thus start a call.

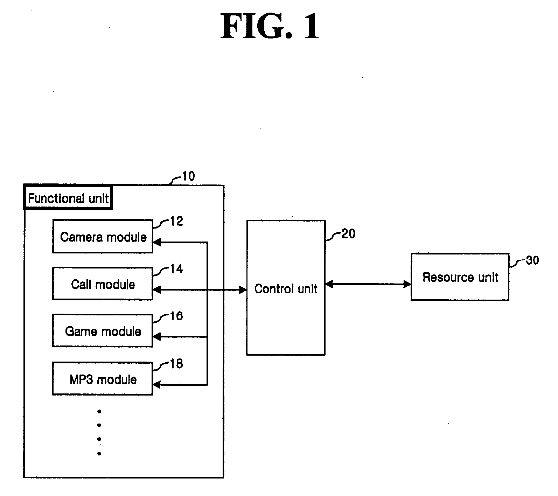

In more detail, FIG.1 is a block diagram of a related art mobile terminal. As shown, the related art terminal includes a functional unit 10 including a camera module 12, a call module 14, a game module 16, an MP3 module 18, etc. The terminal also includes a control unit 20 for controlling each module included in the functional unit 10, and a resource unit 30 that activates the functions.

Thus, if a certain module (e.g., the camera module 12) included in the functional unit 10 intends to use the resource unit 30, the control unit 20 checks if any resources are currently in use. If the resources are not in use, the camera module 12 occupies the necessary resources. However, if another module (e.g., the call module 14) intends to operate while the camera module 12 is currently operating (that is, occupying the resources), the control unit 20 sends a resource release request message to the camera module 12 currently occupying the resources. Once the camera module 12 releases the resources, the call module 14 occupies the resources to start a call.

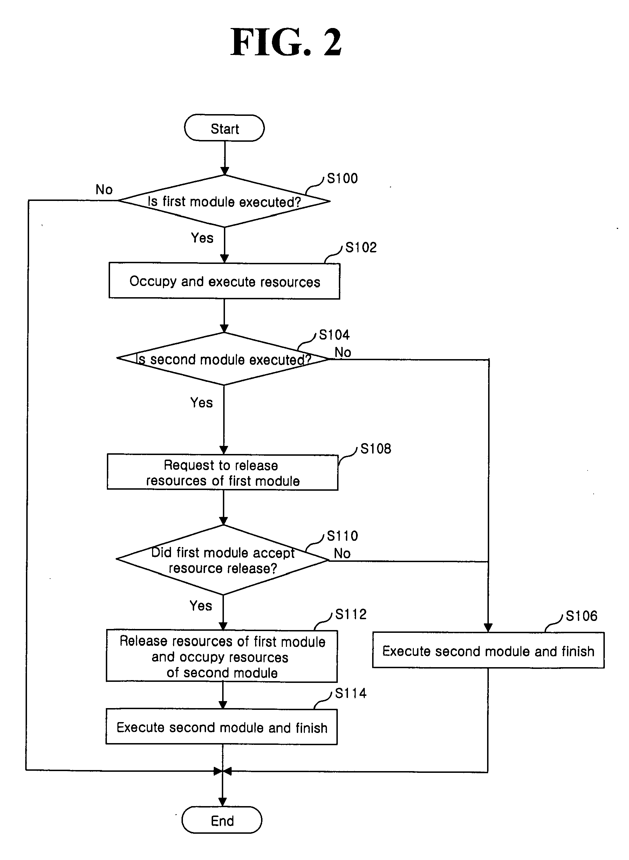

In more detail, FIG.2 is a flowchart illustrating a related art method for managing resources of a mobile communication terminal. As shown, when a first module is selected in a state where the resources are not currently occupied, the selected first module is executed by occupying the necessary resources (S100 and S102). Then, when a second module is to be executed while the first module is current executing, a resource release request message is sent to the first module currently occupying the resources (S104 and S108).

When the first module having received the request message accepts the request to release the resources (Yes in S110), the second module is started and occupies the resources (S112 and S114). If the second module is not to be executed or the first module does not release the resources, the second module is not executed (S106).

However, the related art method of managing resources in the mobile terminal does not effectively manage a plurality of modules using resources.

### SUMMARY OF THE INVENTION

Accordingly, one object of the present invention is to address the above-noted and other problems.

Another object of the present invention is to effectively control modules by allocating different rankings to the plurality of different resources.

To achieve these and other advantages and in accordance with the purpose of the present invention, as embodied and broadly described herein, the present invention provides in one aspect a mobile communication terminal including a resource unit configured to allocate resources so as to execute a first module, and a resource management unit configured to compare a ranking of a second module selected to be executed with respect to a ranking of the first module so as to determine if the second module is allocated the resources used by the first resources.

In another aspect, the present invention provides a method of managing resources on a mobile communication including allocating the resources so as to execute a first module, and comparing a ranking of a second module selected to be executed with respect to a ranking of the first module so as to determine if the second module is allocated the resources used by the first module.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG.1 is a block diagram of a related art mobile communication terminal;
FIG.2 is a flowchart illustrating a related method for managing resources of a mobile communication terminal;
FIG.3 is a block diagram an apparatus for managing resources of a mobile communication terminal according to an embodiment of the present invention; and
FIG.4 is a flowchart illustrating a method for managing resources of a mobile communication terminal according to an embodiment of the present invention.

### DETAILED DESCRIPTION OF THE INVENTION

Hereinafter, a preferred embodiment of the present invention will be described with reference to the accompanying drawings.

In accordance with an embodiment of the present invention, if multiple modules intend to use resources, the modules are placed in a waiting list. Further, if the resources are released, the resources are allocated to one of the modules in the waiting list based on a set of rankings such as priorities, waiting times, etc.

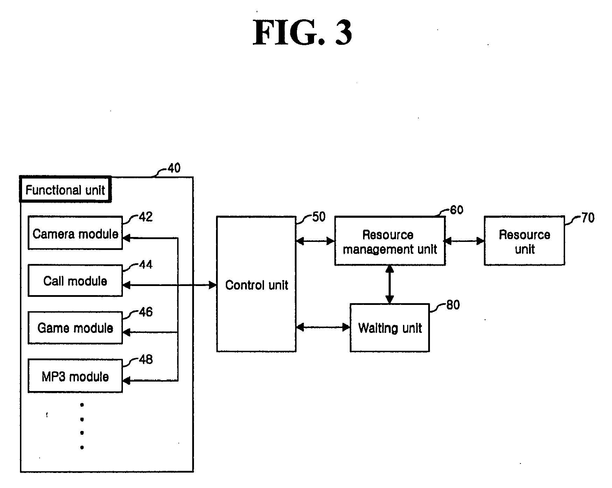

In more detail, FIG.3 is a block diagram illustrating an apparatus for managing resources of a mobile communication terminal according to an embodiment of the present invention. As shown, the apparatus includes a functional unit 40 having a camera module 42, a call module 44, a game module 46, an MP3 module 48, etc. Other modules such as a USB module, a Bluetooth module, etc. may also be included in the functional unit 40.

The apparatus also includes a control unit 50 for controlling each module and the overall operation of the terminal, a resource unit 70 for providing the appropriate resources (e.g., a PS (packets switching) resource, a buffer resource, a DSP (digital signal processor), etc.) for operating the modules, a resource management unit 60 for managing the resources, and a waiting unit 80 for adding a second module to a waiting list and managing the second module when the second module intends to use resource that are being occupied by a first module. Further, the waiting list may be stored in a storage area (e.g., memory) or may be stored in the waiting unit 80.

Thus, with reference to FIG.3, if other modules such as the call module 44, game module 46, MP3 module 48, etc. are selected while the camera module 42 is currently operating, the resource management unit 60 determines if the resources are currently in use by the camera module 42 under control of the control unit 50. If the resources are currently being used by the camera module 42, the other modules selected to use the corresponding resources are added to a waiting list. The other modules are added to the waiting list based on a ranking such as a priority and/or waiting time of each module and the order of execution is established according to the set priorities. Further, the priorities can be set by the terminal manufacturer or by the user.

If the module (e.g., the camera module 42) currently in execution is terminated, or another module (e.g., the call module 44) selected for execution has a higher ranking than the camera module 42 currently in execution, the resource management unit 60 requests the camera module 42 release the resources. The camera module 42 then releases the corresponding resources. In addition, when the corresponding resources are released, the resource management unit 60 sends a resource occupancy permission message to the other module (e.g., the call module 44) selected in the waiting list based on the higher priority and waiting times. The selected module (e.g., the camera module 42) that has received the permission message occupies the corresponding resources so as to execute the camera function.

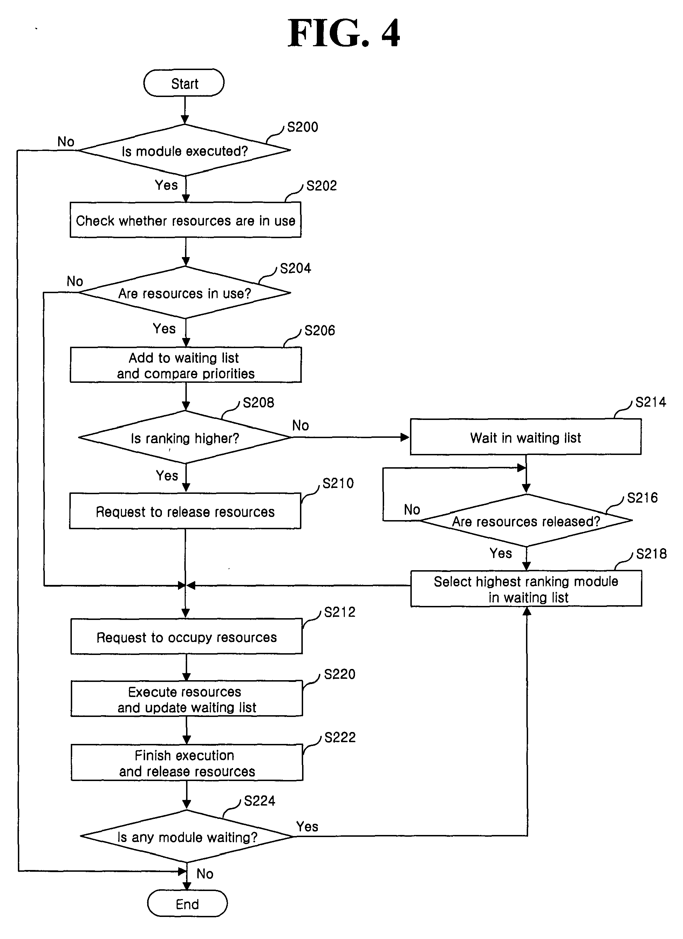

Turning next to FIG.4, which is a flowchart illustrating a method for managing resources of a mobile communication terminal according to an embodiment of the present invention. FIG. 3 will also be referred to in this description. In this example, it is assumed that the camera module 42 is executing and the call module 44 is activated to request the resources used by the camera module 42.

As shown in FIG. 4, the method first determines if the call module 44 has been selected to be executed (S200). If the call module 44 has been selected to be executed (Yes in S200), the method determines if the camera module 42 is currently executing (S202). If the camera module 42 is currently using the resources (Yes in S204), the method adds the selected call module 44 to the waiting list and compares the rankings of the modules in the waiting list (S206). Thus, in this example, the method determines that the call module 44 has been selected, the camera module 42 is currently using the resources, places the call module 44 in the waiting list, and compares the rankings of the camera module 42 and the call module 44.

The comparing step based on the rankings uses information such as priorities, waiting times, etc. For example, the call module 44 may be assigned a highest priority, the MP3 module 48 may be assigned a next highest priority, the camera module 42 a lower priority, and the game module 46 the lowest priority. In more detail, a priority table may be stored in the memory on the terminal and include the following information:

| Module name | Priority level |
|---|---|
| Camera module | 3 |
| Call module | 1 |
| Game module | 4 |
| MP3 module | 2 |

Further, the priority values may be initially assigned by the manufacture of the terminal and later changed by the user (via menu options provided on the terminal).

In addition, rather than including a priority level of each module, the highest priority module may be placed first in the table, the second highest priority module may be placed second in the list, etc. The table may also include waiting times indicating how long a module has been waiting to use the resources. Thus, rather than using the priorities, the method may select a module that has been waiting the longest time. In addition, if two modules included the same priority level, the waiting times may be used to decide which of the two modules is selected from the waiting list.

Returning again to FIG. 4. After the call module 44 is added to the waiting list, the resource management unit 60 determines if the ranking of the call module 44 is higher than the currently executing camera module 42 (S208). If the ranking of the call module 44 is higher (Yes in S208), the resource management unit 60 sends a resource release request message to the camera module (S210) requesting the camera module 42 releases the resources. However, if the ranking of the call module 44 is lower than the ranking of the camera module 42 (No in S208), the call module 44 is placed in the waiting list of the waiting unit and set into a waiting state (S214).

Further, when the call module 44 (or any other module) is placed into the waiting list, the resource management unit 60 periodically checks if the resources of the camera module 42 are released (S216). If the resources are released (Yes in S216), the waiting unit 80 selects the highest ranking module in the waiting list using information such as the priorities, waiting times, etc. (S218). When the highest ranking module is selected or the camera module 42 releases the resources, the resource management unit 60 sends a resource occupancy request message to the selected highest ranking module or the call module 44 to request the released resources (S212).

Then, the highest ranking module or the call module 44 begins execution, and the waiting unit 80 removes the selected highest ranking module or the call module 44 from the waiting list (S220). When the highest ranking module or the call module 44 occupying the resources has completed and the resources are released, the resource management unit 60 determines if there is are any other modules in the waiting list (S224). If there are other modules in the waiting list, the method returns to the step S218, the highest ranking module is selected in the waiting list, and the steps S212, S220, S222 and S224 are repeated.

As described above, in the present invention, the plurality of different modules are assigned rankings, and then a particular module is selected based on the assigned rankings (e.g., priorities and/or waiting times). Thus, the modules using the same resources can be managed in a task list or waiting list without terminating the module in use, and it is possible to maintain the previously used information when re-activating the modules.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

## Claims

1. A mobile communication terminal, comprising:
a resource unit configured to allocate resources so as to execute a first module; and
a resource management unit configured to compare a ranking of a second module selected to be executed with respect to a ranking of the first module so as to determine if the second module is allocated the resources used by the first module.

2. The mobile terminal of claim 1, further comprising:
a waiting unit configured to store a waiting list including a list of modules waiting to be executed,
wherein the waiting unit updates the waiting list to include the second module when the second module is selected to be executed.

3. The mobile terminal of claim 2, wherein the list of modules in the waiting list are listed based on their ranking with respect to each other such that a last module in the list has a lowest ranking.

4. The mobile terminal of claim 2, wherein the ranking of the modules comprises a priority value or a waiting time corresponding to how long the respective module has been included in the waiting list, said priority value or waiting time being included with the respective modules in the waiting list.

5. The mobile terminal of claim 1, wherein if the ranking of the second module is higher than the ranking of the first module, the resource management unit sends a resource release request message to the first module requesting the first module release the resources

6. The mobile terminal of claim 5, wherein if the first module releases the resources, the resource management unit sends a resource occupancy message to the second module indicating the second module can occupy the resources.

7. The mobile terminal of claim 2, wherein if the ranking of the second module is not higher than the ranking of the first module, the resource management unit places the second module in the waiting list into a waiting mode.

8. The mobile terminal of claim 7, wherein the resource management unit periodically checks whether or not the resources are being used, and when the resources are not being used, selects a module from the waiting list having a highest ranking to be executed.

9. The mobile terminal of claim 2, wherein the list of modules include one of a camera module, a call module, a game module, an MP3 module and a USB module.

10. The mobile terminal of claim 2, further comprising:
a control unit configured to control an overall operation of the resource management unit, the first and second modules, and the waiting unit.

11. A method of managing resources on a mobile communication, comprising:
allocating the resources so as to execute a first module; and
comparing a ranking of a second module selected to be executed with respect to a ranking of the first module so as to determine if the second module is allocated the resources used by the first module.

12. The method of claim 11, further comprising:
storing a waiting list including a list of modules waiting to be executed; and
updating the waiting list to include the second module when the second module is selected to be executed.

13. The method of claim 12, wherein the list of modules in the waiting list are listed based on their ranking with respect to each other such that a last module in the list has a lowest ranking.

14. The method of claim 12, wherein the ranking of the modules comprises a priority value or a waiting time corresponding to how long the respective module has been included in the waiting list, said priority value or waiting time being included with the respective modules in the waiting list.

15. The method of claim 11, further comprising:
sending a resource release request message to the first module requesting the first module release the resources if the ranking of the second module is higher than the ranking of the first module.

16. The method of claim 15, further comprising:
sending a resource occupancy message to the second module indicating the second module can occupy the resources if the first module releases the resources.

17. The method of claim 12, further comprising:
placing the second module in the waiting list into a waiting mode if the ranking of the second module is not higher than the ranking of the first module.

18. The method of claim 17, further comprising:
periodically checking whether or not the resources are being used; and
selecting a module from the waiting list having a highest ranking when the resources are not being used.

19. The method of claim 12, wherein the list of modules include one of a camera module, a call module, a game module, an MP3 module and a USB module.

20. The method of claim 12, further comprising:
determining if any modules are listed in the waiting list when the resources are not being used by the first or second module; and
selecting a module from the waiting list having a highest ranking when the determining step determines the resources are not being used by the first or second module.
